# EUROPÄISCHE PATENTSCHRIFT

(11) **EP 1 105 698 B1**
(45) Veröffentlichungstag und Bekanntmachung des Hinweises auf die Patenterteilung: **24.05.2006**
(21) Anmeldenummer: 98967172.2
(22) Anmeldetag: 23.12.1998
(51) Int. Cl.: G01D 18/00

(54) **VERFAHREN ZUM BESTIMMEN EINER POSITION ABHÄNGIG VON DEM MESSSIGNAL EINES POSITIONSSENSORS**
METHOD FOR DETERMINING A POSITION IN ACCORDANCE WITH THE MEASUREMENT SIGNAL OF A POSITION SENSOR
PROCEDE POUR DETERMINER UNE POSITION EN FONCTION D'UN SIGNAL DE MESURE EMIS PAR UN CAPTEUR DE POSITION

(30) Priorität: 12.08.1998 DE 19836388
(43) Veröffentlichungstag der Anmeldung: 13.06.2001
(73) Patentinhaber: SIEMENS AKTIENGESELLSCHAFT, 80333 München (DE)
(72) Erfinder: SCHIFFERL, Ludwig, D-93080 Pentling (DE); BAUER, Erwin, D-84137 Vilsbiburg (DE)
(86) Internationale Anmeldenummer: PCT/DE1998/003781
(87) Internationale Veröffentlichungsnummer: WO 2000/009972

(56) Entgegenhaltungen:
- WO-A-89/10540
- US-A- 4 730 264
- US-A- 5 764 066

## Beschreibung

Verfahren zum Bestimmen einer Position abhängig von dem Meßsignal eines Positionssensors

Die Erfindung betrifft ein Verfahren zum Bestimmen einer Position abhängig von dem Meßsignal eines Positionssensors, insbesondere für den Einsatz des Positionssensors bei einem elektromechanischen Stellantrieb für Gaswechselventile einer Brennkraftmaschine.

Ein präzises Bestimmen der Position des Gaswechselventils ist die Grundlage für einen geräuscharmen und weitgehend verschleißfreien Betrieb eines elektromechanischen Stellantriebs, der beispielsweise zum Steuern der Bewegung von Gaswechselventilen bei einer Brennkraftmaschine vorgesehen ist. Derartige elektromechanische Stellantriebe sind beispielsweise aus der EP 0 724 067 A1 bekannt.

Positionssensoren, die ein magnetoresistives Element und einen relativ zu dem magnetoresistiven Element beweglichen Permanentmagneten aufweisen, werden zum Erfassen der Position bei insbesondere dem elektromechanischen Stellantrieb eingesetzt. Magnetoresistive Elemente, insbesondere sogenannte Giant Magneto Resistive (GMR) Elemente erzeugen ein Meßsignal, das von der Richtung des auf sie einwirkenden magnetischen Feldes abhängt. Bei einer linearen Bewegung des Permanentmagneten zu dem magnetoresistiven Element hat das Meßsignal des Positionssensors im wesentlichen einen cosinusförmigen Verlauf.

Der Zusammenhang zwischen dem Meßsignal des Positionssensors und der zugehörigen Position wird durch Messungen an einem Referenz-Positionssensor ermittelt und dann in Form einer Kennlinie, z.B.als Tabelle, in Steuereinheiten abgelegt, die die Position aus der Kennline abhängig von dem Meßsignal des Serien-Positionssensors ermitteln. Dabei treten ggf. Fehler bei der Bestimmung der Position auf und zwar erstens durch Ungenauigkeiten bei der Anordnung des Permanentmagneten an dem Objekt, dessen Position erfaßt werden soll, bezogen auf die Anordnung des magnetoresistiven Elements, zweitens durch Ungenauigkeiten bei der Anordnung des Sensorelelements, drittens aufgrund von Toleranzen bei der Fertigung der Positionssensoren, und viertens durch den Einfluß von Störgrößen wie der Temperatur des Sensorelements.

WO 89/10540 offenbart ein glockenförmiges Meßsignals eines Positionssensors aufgetragen über die Position.

US 4,730,264 offenbart eine Korrektur eines Positionssignals, das aus einem Meßsignal ermittelt wird, abhängig von den Endwerten des Meßsignals, dessen Verlauf als linear vorausgesetzt wird.

Die Aufgabe der Erfindung ist es, ein Verfahren zum Bestimmen einer Position abhängig von dem Meßsignal eines Positionssensors zu schaffen, das ein präzises und zuverlässiges Bestimmen der Position sicherstellt. Die Aufgabe wird erfindungsgemäß durch die Merkmale des unabhängigen Patentanspruchs 1 gelöst. Vorteilhafte Ausgestaltungen der Erfindung sind in den Unteransprüchen gekennzeichnet.

Ausführungsbeispiele der Erfindung sind anhand der schematischen Zeichnungen näher erläutert. Es zeigen:
- Figur 1: eine Anordnung eines Positionssensors in einem Stellantrieb für ein Gaswechselventil einer Brennkraftmaschine,
- Figur 2: eine vergrößerte Darstellung des Positionssensors,
- Figur 3: eine Darstellung einer zweiten Ausführungsform des Positionssensors
- Figur 4: den Verlauf des Meßsignals des Positionssensors abhängig von der Position,
- Figur 5: ein erstes Flußdiagramm zum Ermitteln einer Kenngröße für den axialen Versatz.
- Figur 6: ein zweites Flußdiagramm zum Ermitteln der Position.

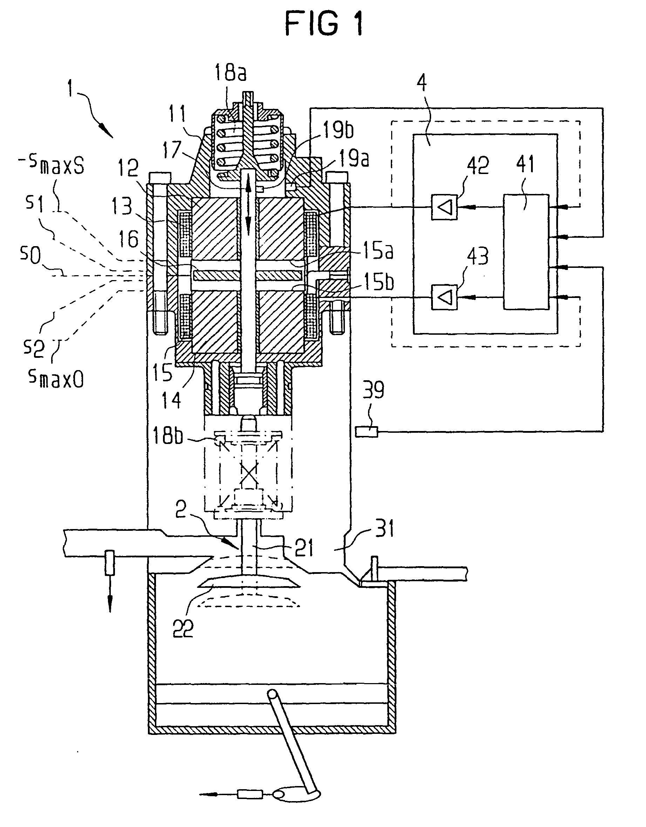

Eine Brennkraftmaschine (Figur 1) umfaßt einen Stellantrieb, der auf ein als Gaswechselventil ausgebildetes Stellglied einwirkt und der in einem Zylinderkopf 31 der Brennkraftmaschine angeordnet ist. Das Gaswechselventil 2 ist entweder als Auslaßventil oder als Einlaßventil ausgebildet. Das Gaswechselventil 2 hat einen Schaft 21 und einen Teller 22. Der Stellantrieb 1 hat ein Gehäuse 11, dem ein erster und ein zweiter Magnet angeordnet sind. Der erste Elektromagnet hat einen ersten Kern 12, der mit einer ersten Spule 13 versehen ist. Der zweite Elektromagnet hat einen zweiten Kern 14, der mit einer zweiten Spule 15 versehen ist. Ein Anker ist vorgesehen, dessen Ankerplatte 16 in dem Gehäuse 11 beweglich zwischen einer ersten Anlagefläche 15a des ersten Elektromagneten und einer zweiten Anlagefläche 15b des zweiten Elektromagneten angeordnet ist. Die Ankerplatte ist somit beweglich zwischen einer ersten Endposition s_{E1} (Schließposition) und einer zweiten Endposition s_{E2} (Offenposition). Der Anker umfaßt desweiteren einen Ankerschaft 17, der durch Ausnehmungen des ersten und des zweiten Kerns 12, 14 geführt ist und der mit dem Schaft 21 des Gaswechselventils 2 mechanisch koppelbar ist. Ein erstes Rückstellmittel 18a und ein zweites Rückstellmittel 18b, die vorzugsweise als Federn ausgebildet sind, spannen die Ankerplatte 16 in die vorgegebene Ruheposition S₀ vor.

Ein Positionssensor ist vorgesehen, der derart an oder in dem Stellantrieb 1 angeordnet ist, daß er mittelbar oder unmittelbar die Position s der Ankerplatte 16 und des Ankerschafts 17 erfaßt. Der Positionssensor umfaßt ein Sensorelement 19a und ein Geberteil 19b. Vorzugsweise ist das Geberteil 19b an dem Ankerschaft 17 und das Sensorelement 19a in dem Gehäuse 11 angeordnet. Die Bewegungsrichtung des Ankerschafts 17 ist durch den Doppelpfeil dargestellt.

Eine Steuereinrichtung 4 ist vorgesehen, die das Meßsignal des Positionssensors oder auch weiterer Sensoren erfaßt und gegebenenfalls von einer übergeordneten Steuereinrichtung für Motorbetriebsfunktionen Steuersignale empfängt. Die Steuereinrichtung 4 steuert abhängig von den Meßsignalen und den Steuersignalen die erste und die zweite Spule 13, 15 des Stellantriebs 1 an. Die Steuereinrichtung 4 umfaßt eine Steuereinheit 41, in der die Stellsignale für die Spulen 13 und 15 berechnet werden, wofür u. a. vorzugsweise ein Positionsregler vorgesehen ist, und eine erste Leistungsendstufe 42 und eine zweite Leistungsendstufe 43, die die Stellsignale verstärkt. Die Steuereinrichtung 4 kann alternativ auch eine Baueinheit mit der übergeordneten Steuereinrichtung für Motorbetriebsfunktionen bilden.

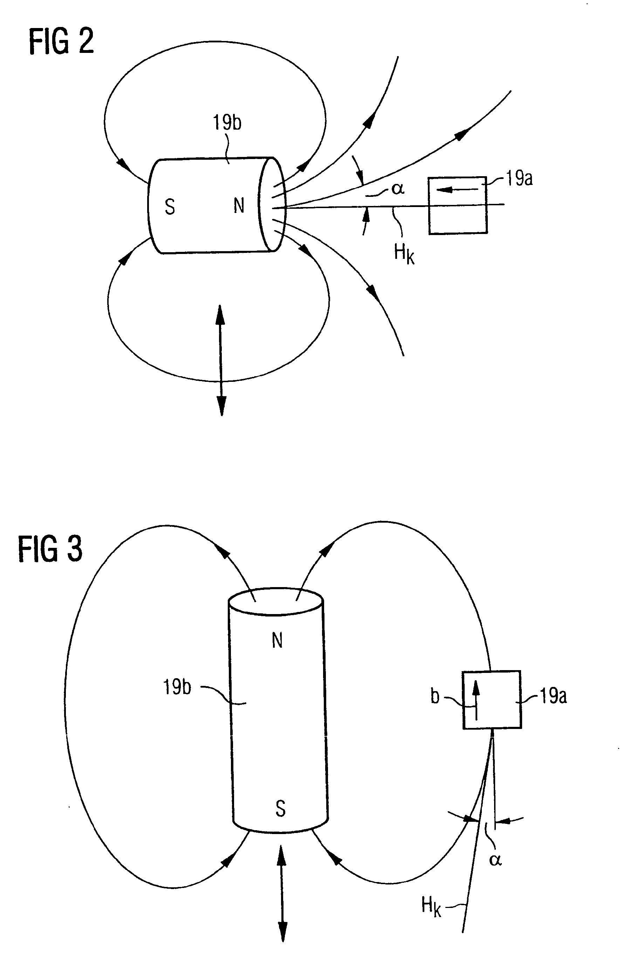

Figur 2 zeigt den Positionssensor in vergrößerter Darstellung. Das Geberteil 19b ist als Permanentmagnet ausgebildet, der im wesentlichen stabförmig ist und mit seiner Magnetisierungsrichtung (also der Magnetachse zwischen dem Nordpol N und dem Südpol S) senkrecht zu der Bewegungsrichtung des Ankerschafts 17 (angedeutet durch den Doppelpfeil) angeordnet ist. Das Sensorelement 19a ist als GMR-Element ausgebildet und derart angeordnet, daß die Bezugsachse b der Magnetisierung der Meßschicht des GMR-Elements parallel zu der Magnetisierungsrichtung des Permanentmagneten angeordnet ist. Das Sensorelelement 19a kann aber beispielsweise auch als AMR-Element oder als ein sonstiges Element ausgebildet sein, das ein von der Richtung des Magnetfeldes abhängiges Meßsignal erzeugt.

Das Sensorelement 19a und das Sensorelement 19b sind idealerweise so zueinander angeordnet, daß die Magnetfeldkomponente H_{K} in der Ruheposition s₀ der Winkel α = 0 mit der Bezugsachse des Sensorelements 19a einschließt. Jeder Winkel α, den die Magnetfeldkomponente H_{K} der Bezugsachse b des Sensorelements 19a einschließt, ist mit der jeweiligen Position s korrelliert.

Alternativ kann das Geberteil 19b, wie in Figur 3 dargestellt, auch mit seine Magnetisierungsrichtung parallel zu der Bewegungsrichtung des Ankerschafts 17 angeordnet sein.

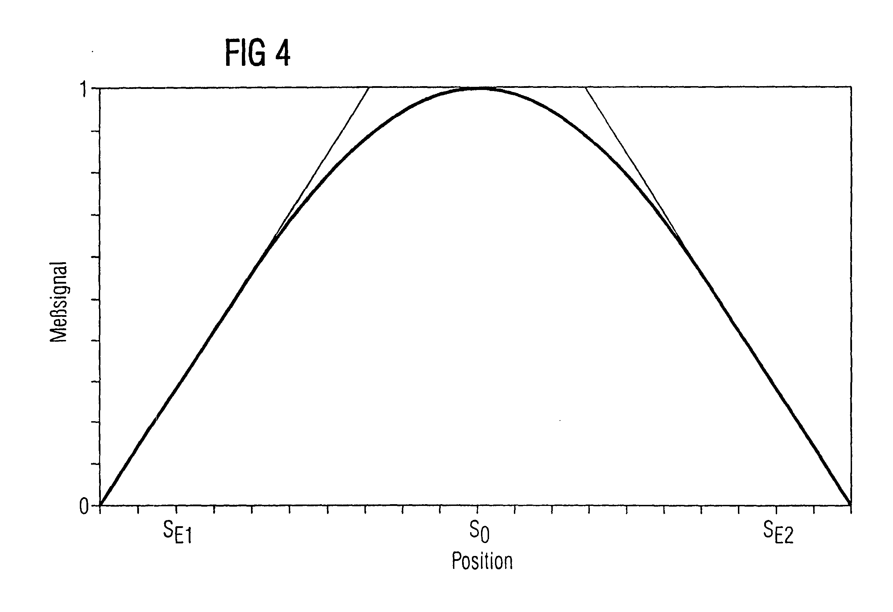

Der von der Position abhängige Verlauf des Meßsignals des Positionssensors gemäß Figur 2 oder 3 ist exemplarisch in Figur 4 dargestellt. Längs der Ordinate ist das Meßsignal aufgetragen normiert auf einen Wertebereich zwischen null und eins. Längs der Abszisse ist die Position s des Geberteils 19b und damit mittelbar auch des Ankerschafts 17 und der Ankerplatte 16 aufgetragen. Das Meßsignal zeigt einen glockenförmigen, cosinusartigen Verlauf, wobei dieser sichtlich in dem Nahbereich der ersten und zweiten Endposition s_{E1}, s_{E2} annäherend linear ist, während er in der Ruheposition S₀ stark gekrümmt ist. Der cosinusartige Verlauf hängt ab von der relativen Orientierung zweier Magnetisierungen in dem Sensorelement 19a, nämlich der Magnetisierung des hartmagnetischen Anteils, welche die Bezugsachse b bestimmt, und der dem externen Feld folgenden Magnetisierung des weichmagnetischen Anteils und damit vom externen Feld ab. Dabei muß die Feldstärke nur innerhalb eines bestimmten Feldfensters liegen bevorzugt etwa im Bereich von 3 bis 30 kA/m. Für kleinere Feldstärken ist der weichmagnetische Anteil nicht gesättigt, für größere Feldstärken wird der hartmagnetische Anteil beeinflußt.

Der Verlauf des Meßsignals zeichnet sich dadurch aus, daß gerade in dem Nahbereich an der ersten und zweiten Endposition s_{E1}, s_{E2} das Signal annähernd linear verläuft, wodurch eine hohe Auflösung des Meßsignals und ein präzises Bestimmen der Position ermöglicht ist.

Eine eindeutige Zuordnung der jeweiligen Position ist jedoch nur bei dem Extremum des Meßsignals möglich, das hier ein Maximum ist.Diese eindeutige Zuordnung im gesamten Wertebereich des Meßsignals kann jedoch durch Auswerten von zur Verfügung stehenden Informationen, wie der gerade aktuellen gewünschten Endposition des Gaswechselventils (ggf. abgeleitet aus den Steuersignalen der übergeordneten Steuereinrichtung), oder aus dem Strom durch die jeweilige Spule erfolgen. Der Vorteil bei dieser Kurvenform ist, daß zur Kalibrierung der Kurve die Meßsignale in der ersten und zweiten Endposition s_{E1}, s_{E2} und zusätzlich das Maximum des Meßsignals ermittelbar sind. Somit hat man drei Punkte zur Verfügung, bei denen die Kennlinie eindeutig bestimmbar ist, was für eine Steuerung des Ventiles mittels eines Beobachtersystems von Vorteil ist, da sich die Kurve stets bestimmen läßt.

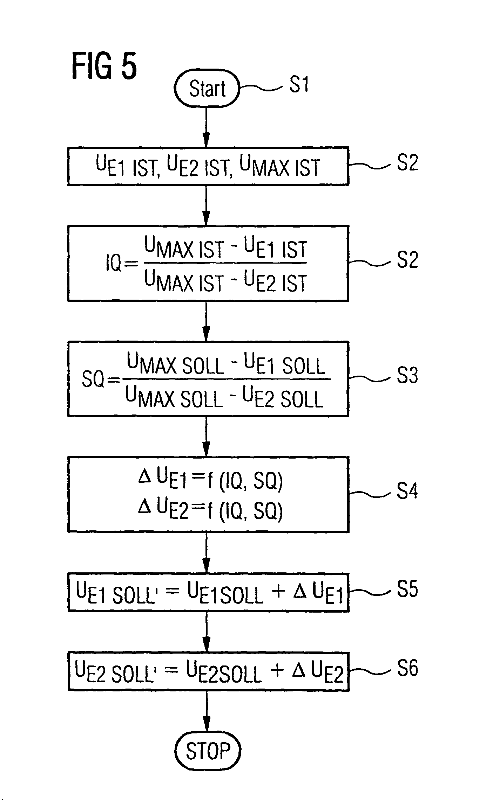

In Figur 5 ist ein erstes Flußdiagramm zum Ermitteln einer Kenngröße für den axialen Versatz dargestellt, der definiert ist durch den Versatz der Bezugsachse b des Sensorelements 19a zu der Magnetisierungsachse des Geberteils 19b in der Bewegungsrichtung des Geberteils 19b und zwar wenn die Ankerplatte 16 in der Ruheposition s₀ ist. Idealerweise ist dieser axiale Versatz gleich Null. Bei einem Serieneinsatz des Positionssensors in dem elektromechanischen Stellantrieb 1 können jedoch Ungenauigkeiten bei der Anordnung des Positionssensors auftreten.

Das Programm (Figur 5) wird in einem Schritt S1 gestartet. In einem Schritt S2 werden der Istwert U_{E1IST} des Meßsignals des Positionssensors in der ersten Endposition s_{E1}, der Istwert U_{E2IST} des Meßsignals in der zweiten Endposition s_{E2} und der Istwert U_{MAXIST} des Extremalwertes des Meßsignals erfaßt.

In einem Schritt S3 wird ein Istquotient IQ berechnet. Dazu wird die Differenz des Istwertes U_{MAXIST} des Extremalwertes des Meßsignals und des Istwertes U_{E1IST} des Meßsignals in der ersten Endposition s_{E1} ermittelt und die Differenz des Istwertes U_{MAXIST} und des Istwertes U_{E2IST} ermittelt. Der Istquotient entspricht dann dem Quotienten der beiden Differenzen. Der Istquotient zeichnet sich dadurch aus, daß er unabhängig von einer Verschiebung und einer Änderung der Verstärkung des Meßsignals ist und ein Maß für den axialen Versatz ist.

In einem Schritt S4 wird ein Sollquotient SQ ermittelt. Dazu wird die Differenz des Sollwertes U_{MAXSOLL} des Extremalwertes des Meßsignals und des Sollwertes U_{E1SOLL} des Meßsignals in der ersten Position s_{E1} berechnet. Ferner wird die Differenz des Sollwertes U_{MAXSOLL} des Extremalwertes des Meßsignals und des Sollwertes U_{E2SOLL} des Meßsignals in der zweiten Endposition s_{E2} ermittelt. Durch Verhältnisbildung der beiden Differenzen wird dann der Sollquotient SQ berechnet. Die Sollwerte U_{E1SOLL} U_{E2SOLT-}, U_{MAXSOLL} sind fest vorgegeben und durch Messungen an dem Referenz-Positionssensor ermittelt. Alternativ kann der Sollquotient SQ auch als fest vorgegebener Wert in der Steuereinheit 41 abgespeichert sein.

In einem Schritt S4 werden ein erster Korrekturwert ΔU_{E1} und ein zweiter Korrekturwert ΔU_{E2} abhängig von dem Istquotienten IQ und dem Sollquotienten SQ ermittelt. Vorzugsweise werden die Korrekturwerte aus einer Tabelle ermittelt, in der der erste und der zweite Korrekturwert ΔU_{E1}, ΔU_{E2} und der Istquotient IQ aufgetragen sind. Alternativ kann das Ermitteln über einen funktionalen Zusammenhang zwischen dem Istquotienten IQ und den ersten und zweiten Korrekturwerten ΔU_{E1}, ΔU_{E2} erfolgen. Die Tabelle ist durch Versuche oder Messungen vorab ermittelt.

In einem Schritt S5 wird ein korrigierter Sollwert U_{E1Soll'} des Meßsignals in der ersten Endposition s_{E1} aus der Summe des Sollwertes U_{E1Soll} des Meßsignals in der ersten Endposition s_{E1} und des ersten Korrekturwerts ΔU_{E1} ermittelt. In einem Schritt S6 wird ein korrigierter Sollwert U_{E2Soll'} des Meßsignals in der zweiten Endposition s_{E2} aus der Summe des Sollwertes U_{E2Soll} des Meßsignals in der zweiten Endposition und des zweiten Korrekturwerts ΔU_{E2} ermittelt. Die korrigierten Sollwerte U_{E1Soll'} und U_{E2Soll'} sind jeweils eine Kenngröße für den axialen Versatz zwischen dem Geberteil 19b und dem Sensorelement 19a. Der axiale Versatz kann durch die korrigierten Sollwerte U_{E1Soll'} oder U_{E2soll'} aus einer ersten bzw. zweiten Kennlinie ermittelt werden, die durch Messungen an dem Referenz-Positionssensor ermittelt wurde und in der Steuereinheit 41 abgelegt ist.

Da der axiale Versatz durch Ungenauigkeiten beim Einbau des Positionssensors und der Herstellung des Stellantriebs bedingt ist, ist es vorteilhaft, wenn die Schritte S1 bis S7 in dem Startbetrieb des Stellantriebs durchgeführt werden. Dadurch ist dann die Rechenbelastung der Steuereinheit 41 im nachfolgenden Betrieb des Positionssensors geringer. Vorteilhaft kann es auch sein, wenn die Schritte S1 bis S7 nur nach einer Wartung oder bei der ersten Inbetriebnahme des Positionssensors durchgeführt werden.

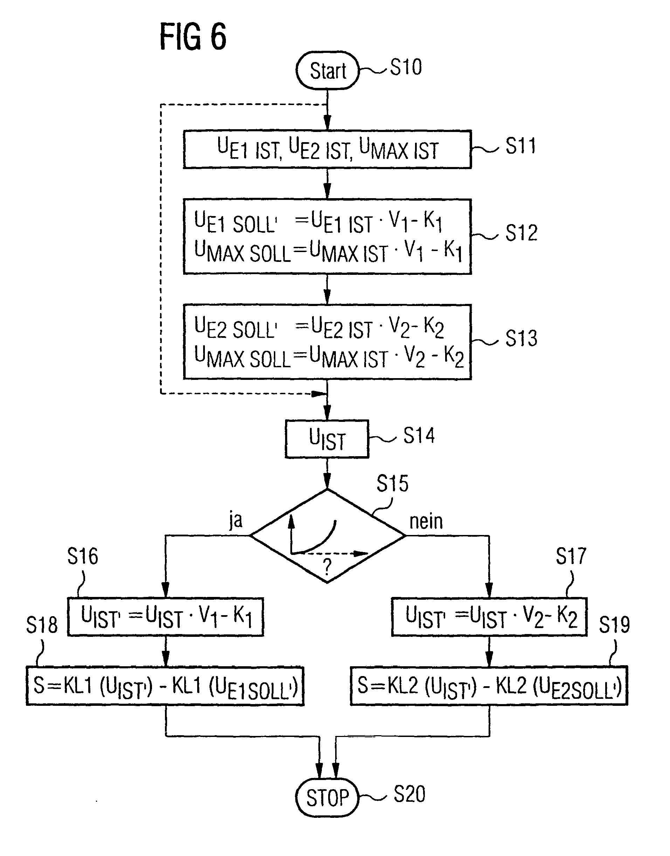

In einem Schritt S10 (Figur 6) wird ein zweites Programm gestartet, mit dem die Position s ermittelt wird. Es werden die zuvor in dem Programm gemäß Figur 4 ermittelten korrigierten Sollwerte U_{E2Soll'}, U_{Elsoll'} aus einem Speicher eingelesen. In einem Schritt S11 werden die Istwerte U_{E1IST}, U_{E2IST}, U_{MAXIST} des Meßsignals in der ersten und zweiten Endposition s_{E1}, s_{E2} und des Extremalwertes ermittelt.

In einem Schritt S12 wird anschließend ein erster Verstärkungswert v₁ und ein erster Offset-Wert k₁ durch die Lösung des in dem Schritt S12 angegebenen linearen Gleichungssystems abhängig von den Sollwerten U_{E1Soll'}, U_{MAXSOLL} und den Istwerten U_{E1IST}, U_{MAXIST} ermittelt.

In einem Schritt S13 wird anschließend ein zweiter Verstärkungswert v₂ und ein zweiter Offset-Wert k₂ durch die Lösung des in dem Schritt S13 angegebenen linearen Gleichungssystems abhängig von den Sollwerten U_{E2Soll'}, U_{MAXSOLL} und den Istwerten U_{E2IST}, U_{MAXIST} ermittelt.

In einem Schritt S14 wird der aktuelle Istwert U_{IST} des Meßsignals des Positionssensors ermittelt. In einem Schritt S15 wird geprüft, ob die Position der Ankerplatte 16 im Bereich zwischen der ersten Endposition s_{E1} und der Ruheposition s₀ oder im Bereich zwischen der Ruheposition s₀ und der zweiten Endposition s_{E2} ist. Dies kann unter anderem aus der Historie des Meßsignals, aus der Bestromung der Spulen 13, 15 und aus den Steuerbefehlen der übergeordneten Steuereinrichtung für Motorbetriebsfunktionen hergeleitet werden.

Ist die Position der Ankerplatte 16 in dem Bereich zwischen der ersten Endposition s_{E2} und der Ruheposition s₀, so wird in einen Schritt S16 verzweigt. Andernfalls wird in einen Schritt S17 verzweigt.

In dem Schritt S16 wird ein korrigierter Istwert U_{IST}, des Meßsignals durch die in dem Schritt S16 angegebene lineare Transformation des Istwertes U_{IST} des Meßsignals abhängig von dem ersten Verstärkungswert v₁ und dem ersten Offset-Wert k₁ ermittelt. In einem Schritt S18 wird dann die Position s aus der Differenz zweier Kennlinien-Operationen ermittelt. Bei der ersten Kennlinien-Operation wird aus der ersten Kennlinie KL1 ein Wert abhängig von dem korrigierten Istwert U_{IST'} des Meßsignals ermittelt. In der zweiten Kennlinien-Operation wird aus der ersten Kennlinie KL1 ein Wert abhängig von dem korrigierten Sollwert U_{E1Soll'} des Meßsignals in der ersten Endposition s_{E1} ermittelt. Durch die zweite Kennlinien-Operation wird der axiale Versatz berücksichtigt. Durch die erste Kennlinien-Operation wir die Verschiebung und die Änderung der Verstärkung des Meßsignals berücksichtigt. Insgesamt erhält man so anhand von einer fest abgespeicherten und an dem Referenz-Positionssensor aufgenommenen ersten Kennlinie ein hochpräzises Positionssignal unabhängig von Toleranzen bei der Fertigung des Positionssensors, von Ungenauigkeiten bei der Anordnung des Permanentmagneten relativ zu dem magnetoresistiven Element und von dem Einfluß der Störgrößen. In einem Schritt S20 wird das Programm dann beendet.

In dem Schritt S17 wird ein korrigierter Istwert U_{IST'} des Meßsignals durch die in dem Schritt S17 angegebene lineare Transformation des Istwertes U_{IST} des Meßsignals abhängig von dem zweiten Verstärkungswert v₂ und dem ersten Offset-Wert k₂ ermittelt. In einem Schritt S19 wird dann die Position s aus der Differenz zweier Kennlinien-Operationen ermittelt. Bei der ersten Kennlinien-Operation wird aus der zweiten Kennlinie KL2 ein Wert abhängig von dem korrigierten Istwert U_{IST'} des Meßsignals ermittelt. In der zweiten Kennlinien-Operation wird aus der zweiten Kennlinie KL2 ein Wert abhängig von dem korrigierten Sollwert U_{E2Soll'} des Meßsignals in der zweiten Endposition s_{E2} ermittelt. Durch die zweite Kennlinien-Operation wird der axiale Versatz berücksichtigt, durch die erste Kennlinien-Operation die Verschiebung und die Änderung der Verstärkung des Meßsignals berücksichtigt. Insgesamt erhält man so anhand von einer fest abgespeicherten und an dem Referenz-Positionssensor aufgenommenen zweiten Kennlinie ein hochpräzises Positionssignal unabhängig von Toleranzen bei der Fertigung des Positionssensors, von Ungenauigkeiten bei der Anordnung des Permanentmagneten relativ zu dem magnetoresistiven Element und von dem Einfluß der Störgrößen. In einem Schritt S20 wird das Programm dann beendet.

Die Schritte S11 bis S13 werden bevorzugt nur dann abgearbeitet, wenn eine vorgegebene Zeitdauer während des Betriebs des Positionssensors (z.B. eine Sekunde) abgelaufen ist und/oder beim Start des Betriebs des Positionssensors und dann nur, wenn die in den Schritten S18 und S19 ermittelten Positionen in den Endpositionen als fehlerhaft erkannt werden und/oder eine die Temperatur des Positionssensors charakterisierende Größe, die beispielsweise die Temperatur des Positionssensors ist, sich um einen vorgegebenen Schwellenwert verändert hat. Dadurch kann der Rechenaufwand in der Steuereinheit 41 gering gehalten werden ohne die Genauigkeit der Verstärkurgswerte v₁, v₂ und der Offset-Werte k₁, k₂ zu verringern, da Versuche ergeben haben, daß die Störgrößen, die eine Veränderung des Verstärkungswertes und des Offset-Wertes ergeben sich nur langsam ändern.

Die Schritte S14 bis S20 werden entweder in einem vorgegebenen Zeitraster (z.B. alle 50 µs) oder bei einer Brennkraftmaschine abhängig von der Drehzahl ausgeführt.

## Patentansprüche

1. Verfahren zum Bestimmen einer Position abhängig von dem Meßsignal eines Positionssensors, der ein Sensorelement (19a) und ein Geberteil (19b) hat, das zwischen einer ersten und einer zweiten Endposition (s_{E1}, s_{E2}) beweglich ist, wobei das Meßsignal zwischen der ersten und der zweiten Endposition ein Extremum hat, mit folgenden Schritten:
- die Istwerte (U_{E1IST}, U_{E2IST}) des Meßsignals an der ersten und zweiten Endposition (s_{E1}, s_{E2}) werden ermittelt,
- der extremale Wert (U_{MAXIST}) des Meßsignals zwischen der ersten und zweiten Endposition (s_{E1}, s_{E2}) wird ermittelt,
- die Position (s) wird ermittelt abhängig von dem aktuellen Istwert (U_{IST}) des Meßsignals, dem extremalen Wert (U_{MAXIST}) und den Istwerten (U_{E1IST}, U_{E2IST}) an der ersten und zweiten Endposition (s_{E1}, s_{E2}).

2. Verfahren nach Anspruch 1, **dadurch gekennzeichnet, daß** eine Kenngröße für den axialen Versatz zwischen dem Geberteil (19b) und dem Sensorelement (19a) abhängig von dem extremalen Wert (U_{MAXIST}) des Meßsignals und den Istwerten (U_{E1IST}, U_{E2IST}) des Meßsignals an der ersten und der zweiten Endposition ermittelt wird und daß die Position (s) abhängig von der Kenngröße ermittelt wird, wobei sich der axiale Versatz durch Ungenauigkeiten der Anordnung des Positionssensors in einer vorgegebenen Position ergibt.

3. Verfahren nach Anspruch 2, **dadurch gekennzeichnet, daß** der Positionssensor zum Erfassen der Position (s) eines elektromechanischen Stellantriebs (1) vorgesehen ist und daß die Kenngröße während des Startbetriebs des Stellantriebs (1) ermittelt wird.

4. Verfahren nach einem der Ansprüche 2 oder 3, **dadurch gekennzeichnet, daß** ein Verstärkungswert (v₁, v₂) und ein Offset-Wert (k₁, k₂) abhängig von der Kenngröße für den axialen Versatz, dem extremalen Wert (U_{MAXIST}) des Meßsignals und dem Istwert (U_{E1IST}, U_{E2IST}) in der ersten oder zweiten Endposition (s_{E1}, s_{E2}) ermittelt wird und daß das jeweils aktuelle Meßsignal (U_{IST}) abhängig von dem Verstärkungswert (v₁, v₂) und dem Offset-Wert (k₁, k₂) korrigiert wird.

5. Verfahren nach Anspruch 4, **dadurch gekennzeichnet, daß** der Verstärkungswert (v₁, v₂) und der Offset-Wert (k₁, k₂) ermittelt wird, wenn eine vorgegebene Zeitdauer während des Betriebs des Positionssensors abgelaufen ist und/oder eine die Temperatur des Positionssensors charakterisierende Größe sich um einen vorgegebenen Schwellenwert verändert hat und/oder ein Fehler der Position (s) in den Endpositionen (s_{E1}, s_{E2}) erkannt wurde.

6. Verfahren nach einem der Ansprüche 4 oder 5, **dadurch gekennzeichnet, daß** die Position (s) abhängig von dem korrigierten aktuellen Meßsignal aus einer Kennlinie (KL1, KL2) und der Kenngröße für den axialen Versatz ermittelt wird.

7. Verfahren nach einem der vorangehenden Ansprüche, **dadurch gekennzeichnet, daß** die Kenngröße für den axialen Versatz ein korrigierter Sollwert (U_{E1SOLL'}, U_{E2SOLL'}) des Meßsignals an der ersten oder der zweiten Endposition (s_{E1}, s_{E2}) ist.

8. Verfahren nach einem der vorangehenden Ansprüche, **dadurch gekennzeichnet, daß** der extremale (U_{MAXIST}) Wert des Meßsignals der maximale Wert ist.

## Claims

1. Method for determining a position in accordance with the measurement signal of a position sensor, which comprises a sensor element (19a) and a transmitter part (19b) which can be displaced between a first and a second end position (s_{E1}, s_{E2}), the measurement signal having an extremum between the first and the second end position, with the following steps:
- the actual values (U_{E1IST}, U_{E2IST}) of the measurement signal in the first and second end position (s_{E1}, s_{E2}) are determined,
- the extreme value (U_{MAXIST}) of the measurement signal between the first and second end position (s_{E1}, s_{E2}) is determined,
- the position (s) is determined in accordance with the current actual value (U_{IST}) of the measurement signal, the extreme value (U_{MAXIST}) and the actual values (U_{E1IST}, U_{E2IST}) in the first and second end position (s_{E1}, s_{E2}).

2. Method according to Claim 1, **characterized in that** a parameter for the axial offset between the transmitter part (19b) and the sensor element (19a) is determined in accordance with the extreme value (U_{MAXIST}) of the measurement signal and the actual values (U_{E1IST}, U_{E2IST}) of the measurement signal in the first and second end position, and **in that** the position (s) is determined in accordance with the parameter, the axial offset being produced through inaccuracies in the arrangement of the position sensor in a predetermined position.

3. Method according to Claim 2, **characterized in that** the position sensor is intended to detect the position (s) of an electromechanical actuator (1), and **in that** the parameter is determined during the starting operation of the actuator (1).

4. Method according to one of Claims 2 and 3, **characterized in that** a gain value (v₁, v₂) and an offset value (k₁, k₂) are determined in accordance with the parameter for the axial offset, the extreme value (U_{MAXIST}) of the measurement signal and the actual values (U_{E1IST}, U_{E2IST}) in the first and second end position (s_{E1}, s_{E2}), and **in that** the respective current measurement signal (U_{IST}) is corrected in accordance with the gain value (v₁, v₂) and the offset value (k₁, k₂).

5. Method according to Claim 4, **characterized in that** the gain value (v₁, v₂) and the offset value (k₁, k₂) are determined when a predetermined period of time has elapsed during the operation of the position sensor and/or a quantity characterizing the temperature of the position sensor has changed by a predetermined threshold value and/or an error of the position (s) in the end positions (S_{E1}, S_{E2}) has been detected.

6. Method according to one of Claims 4 and 5, **characterized in that** the position (s) is determined, in accordance with the corrected current measurement signal, from a characteristic (KL1, KL2) and the parameter for the axial offset.

7. Method according to one of the preceding claims, **characterized in that** the parameter for the axial offset is a corrected setpoint value (U_{E1SOLL'}, U_{E2SOLL'}) of the measurement signal in the first or the second end position (S_{E1}, S_{E2}).

8. Method according to one of the preceding claims, **characterized in that** the extreme value (U_{MAXIST}) of the measurement signal is the maximum value.

## Revendications

1. Procédé de détermination d'une position en fonction du signal de mesure émis par un capteur de position, qui possède un élément de détection (19a) et une partie de capteur (19b) mobile entre une première et une deuxième position d'extrémité (s_{E1}, s_{E2}), le signal de mesure possédant un extrême entre la première et la deuxième position d'extrémité, comprenant les étapes suivantes :
- détermination des valeurs réelles (U_{E1IST}, U_{E2IST}) du signal de mesure au niveau de la première et de la deuxième position d'extrémité (s_{E1}, s_{E2}),
- détermination de la valeur extrême (U_{MAXIST}) du signal de mesure entre la première et la deuxième position d'extrémité (s_{E1}, s_{E2}),
- détermination de la position (s) en fonction de la valeur réelle actuelle (U_{IST}) du signal de mesure, de la valeur extrême (U_{MAXIST}) et des valeurs réelles (U_{E1IST}, U_{E2IST}) au niveau de la première et de la deuxième position d'extrémité (s_{E1}, s_{E2}).

2. Procédé selon la revendication 1,
**caractérisé en ce qu'**une grandeur caractéristique du décalage axial entre la partie de capteur (19b) et l'élément de détection (19a) est déterminée en fonction de la valeur extrême (U_{MAXIST}) du signal de mesure et des valeurs réelles (U_{E1IST}, U_{E2IST}) du signal de mesure au niveau de la première et de la deuxième position d'extrémité et **en ce que** la position (s) est déterminée en fonction de la grandeur caractéristique, le décalage axial résultant d'imprécisions dans la disposition du capteur de position dans une position prédéterminée.

3. Procédé selon la revendication 2,
**caractérisé en ce que** le capteur de position est prévu pour enregistrer la position (s) d'un actionneur électromécanique (1) et la grandeur caractéristique est déterminée pendant le mode de démarrage de l'actionneur (1).

4. Procédé selon l'une des revendications 2 ou 3,
**caractérisé en ce qu'**une valeur d'amplification (v₁, v₂) et une valeur de décalage (k₁, k₂) sont déterminées en fonction de la grandeur caractéristique du décalage axial, de la valeur extrême (U_{MAXIST}) du signal de mesure et de la valeur réelle (U_{E1IST}, U_{E2IST}) dans la première ou dans la deuxième position d'extrémité (s_{E1}, s_{E2}) et **en ce que** le signal de mesure respectivement actuel (U_{IST}) est corrigé en fonction de la valeur d'amplification (v₁, v₂) et de la valeur de décalage (k₁, k₂).

5. Procédé selon la revendication 4,
**caractérisé en ce que** la valeur d'amplification (v₁, v₂) et la valeur de décalage (k₁, k₂) sont déterminées lorsqu'une durée prédéterminée s'est écoulée pendant le fonctionnement du capteur de position et/ou lorsqu'une grandeur caractérisant la température du capteur de position a varié d'une valeur de seuil prédéterminée et/ou lorsqu'une erreur de position (s) dans les positions d'extrémité (s_{E1}, s_{E2}) a été détectée.

6. Procédé selon l'une des revendications 4 ou 5,
**caractérisé en ce que** la position (s) est déterminée en fonction du signal de mesure actuel corrigé, à partir d'une courbe caractéristique (KL1, KL2) et de la grandeur caractéristique du décalage axial.

7. Procédé selon l'une des revendications précédentes,
**caractérisé en ce que** la grandeur caractéristique du décalage axial est une valeur de consigne corrigée (U_{E1SOLL'}, U_{E2SOLL'}) du signal de mesure au niveau de la première ou de la deuxième position d'extrémité (s_{E1}, s_{E2}).

8. Procédé selon l'une des revendications précédentes,
**caractérisé en ce que** la valeur extrême (U_{MAXIST}) du signal de mesure est la valeur maximale.
